(19) Europäisches Patentamt / European Patent Office / Office européen des brevets

(11) **EP 2 690 396 A1**

(12) **EUROPÄISCHE PATENTANMELDUNG**

(43) Veröffentlichungstag:
**29.01.2014 Patentblatt 2014/05**

(51) Int Cl.:
***G01B 9/02*** *(2006.01)*

(21) Anmeldenummer: **12177615.7**

(22) Anmeldetag: **24.07.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Hexagon Technology Center GmbH 9435 Heerbrugg (CH)**

(72) Erfinder: **Jensen, Thomas 9400 Rorschach (CH)**

(74) Vertreter: **Harmann, Bernd-Günther Kaminski Harmann Patentanwälte AG Landstrasse 124 9490 Vaduz (LI)**

(54) **Interferometrische Entfernungsmessanordnung und ebensolches Verfahren**

(57) Eine interferometrische Entfernungsmessanordnung zur Vermessung von Oberflächen mit wenigstens einer durchstimmbaren Laserquelle zum Erzeugen von mit einer Wellenlängenrampe modulierten Messstrahlung, einem optischen Strahlengang mit einer Sendeoptik zum Emittieren der Messstrahlung auf die Oberfläche und einer Empfangsoptik zum Empfangen der von der Oberfläche zurückgestreuten Messstrahlung weist einen Mess- und einen Referenzarm sowie einen Strahlungsdetektor und einer Auswerteinheit zum Bestimmen der Entfernung von einem Bezugspunkt der Entfernungsmessanordnung zur Oberfläche auf. Hierbei werden durch wenigstens einen Strahlteiler (13,29) n ≥ 2 Kanäle für die parallele Emission von Messstrahlung definiert, denen für einen gegebenen Emissionszeitpunkt jeweils ein unterschiedlicher Teilbereich der Wellenlängenrampe zugewiesen wird.

Fig. 6

**Beschreibung**

Die Erfindung betrifft eine interferometrische Entfernungsmessanordnung zum Vermessen von Oberflächen nach dem Oberbegriff des Anspruchs 1 und ein ebensolches Verfahren nach dem Oberbegriff des Anspruchs 11.

In vielen Anwendungsbereichen besteht das Bedürfnis, Oberflächen von Objekten und damit die Objekte selbst mit hoher Genauigkeit zu vermessen. Dies gilt insbesondere für die fertigende Industrie, für die das Vermessen und Überprüfen von Oberflächen von Werkstücken hohe Bedeutung hat. Für diese Anwendungen existiert eine Reihe von Messgeräten, die für spezielle Aufgaben ausgelegt sind und auch als Koordinatenmessgeräte oder -maschinen bezeichnet werden. Diese Messgeräte vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in US 5,402,582 oder EP 1 474 650 beschrieben. Andere Verfahren verwenden optische Messstrahlung, um Oberflächen berührungslos abtasten zu können.

Ein aus dem Stand der Technik bekannter Ansatz beruht hierbei auf interferometrischen Verfahren, wie beispielsweise der optischen Kohärenztomographie bzw. Optical Coherence Tomography (OCT), wie sie beispielsweise in der WO 2009/036861 oder der europäischen Patentanmeldung mit der Anmeldenummer 11171582.7 beschrieben werden. Die dort geoffenbarten Entfernungsmessverfahren nutzen zur Vermessung von Oberflächen einen frequenzmodulierter Laserstrahl zur Bereitstellung von Messstrahlung, welche auf die Oberfläche emittiert wird. Die von der Oberfläche zurückgestreute Messstrahlung wird wieder empfangen und dient zum interferometrischen Entfernungsmessen von einem Bezugspunkt zur Oberfläche, d.h. in der sogenannten z-Richtung, wobei ein Mess- und ein Referenzarm Verwendung finden.

In den meisten Ausführungsbeispielen erfolgt das Abtasten der Oberfläche mit einem einzigen Meßkanal, der die Distanz zu einem Punkt auf der Oberfläche vermißt, wobei die Oberfläche durch Verfahren des gesamten Probenkopfes über den Pfad von Messpunkten auf der Oberfläche erfolgt. Für eine Vielzahl von Anwendungen besteht jedoch das Bedürfnis, gleichzeitig oder schnell hintereinander eine größere Zahl von Punkten entfernungsmessend abzutasten, ohne dass hierzu der Probenkopf mit der Optik der Reihe nach über jeden zu vermessenden Punkt bewegt werden muss.

Ein aus dem Stand der Technik bekannter Ansatz besteht darin, ein- oder zweidimensional scannende Spiegel zu nutzen, um den Meßstrahl über die Oberfläche bewegen zu können, ohne dass hierfür eine Bewegung des Probenkopfes bzw. der gesamten Messanordnung erforderlich werden. Entsprechende Realisierungen mit mikromechanischen Elementen für interferometrische Meßanordnungen im medizinischen Bereich sind beispielsweise in J. Sun et al., "MEMS-based endoscopic OCT", Int. J. of Opt., 2011 beschrieben. Der Nachteil dieser spiegelbasierten Lösungen  ist jedoch die nach wie vor sequentielle Abtastung räumlich ausgedehnter Objekte, welche die realisierbare Geschwindigkeit verringert. Eine Erhöhung ist nur durch gesteigerte Abtastraten oder durch Parallelisierung des Messprozesses orthogonal durch Verwendung von mehreren Kanälen möglich.

Daher werden in der WO 2009/036861 sowohl Probenköpfe beschrieben, bei denen der Strahlengang der Messstrahlung in zwei Kanäle aufgespalten wird, deren Emissions- und Empfangsrichtung zueinander orientiert ist, als auch solche, bei denen eine Mehrzahl von räumlich parallelen Kanälen realisiert sind. Die Messkanäle können bei diesen Ansätzen zeitlich parallel oder sequentiell genutzt werden, wobei bei zeitgleicher Verwendung entweder zwei oder mehr separate Messanordnungen oder aber auch eine einzige Messanordnung mit einer Trennung der Kanäle, z.B. durch unterschiedliche Polarisationsrichtungen, möglich ist. Eine solche Ausbildung des Probenkopfes erlaubt beispielsweise eine Vermessung von Kanten oder Stufen. Allerdings ist durch die polarisationsabhängige Trennung der Aufbau kompliziert und die Zahl der verwirklichbaren Kanäle begrenzt.

In Hinblick auf das zugrundeliegende Meßprinzip sind für die optische Kohärenztomographie sowohl sehr schnell durchstimmbare Quellen, wie sie bspw. in T. Klein et al., "Megahertz OCT for ultrawide-field retinal imaging with a 1050nm Fourier domain mode-locked laser", Opt. Express 19, 3044-3062 (2011), als auch sehr schnelle in der Fourier-Domäne spektral auflösende Ansätze mit Hochgeschwindigkeits-Zeilen-CCDs bekannt, wie sie bspw. in Y.K. Tao et al., "High-speed complex conjugate resolved  retinal spectral domain optical coherence tomography using sinusoidal phase modulation", Opt. Lett. 32, 2918 (2007) beschrieben werden.

Beide Verfahren zeigen jedoch einen Mangel an verfügbarer Kohärenzlänge, wie sie im Bereich der industriellen Meßtechnik benötigt wird, bspw. für den Einsatz in gattungsgemässen Koordinatenmeßmaschinen bzw. -geräten.

Für Verfahren der optischen Kohärenztomographie im Zeitbereich (Time-Domain OCT) mit breitbandigen Quellen würde dies aufgrund der geringen Kohärenzlänge eine zusätzliche Abtastung in der z-Richtung, d.h. in der Flächennormalen der zu vermessenden Oberfläche, erfordern, was wiederum zusätzliche Antriebe und erhöhte Komplexität bedingt, vgl. T. Dresel et al., "Three-dimensional sensing of rough surfaces by coherence radar", Appl. Opt. 31, 919 (1992).

Verfahren der optischen Kohärenztomographie im Frequenzbereich (Frequency-Domain OCT), d.h. mit spektraler Auflösung, könnten durch Verwendung eines Flächensensors anstelle eines Zeilensensors in ihrer Fähigkeit zum parallelen Abtasten weiterentwickelt werden. Nachteilig sind hier jedoch die geringen Frame-Raten bzw. Auslesegeschwindigkeiten sowie die ebenfalls geringen typischen Kohärenzlängen in der Größenordnung von einigen wenigen Millimetern.

Dabei kann auch der Ansatz der frequenzmodulierten OCT durch Verwendung von Zeilen- oder Flächensensoren in den zwei- oder dreidimensionalen Abtastbereich erhöht werden. Da hierbei aufgrund der erforderlichen Abtastung des Interferogramms mit Hunderten von Datenpunkten auch eine entsprechenden Aufnahme vieler hundert Datenfelder mit dem Zeilen- oder Flächensensors für eine vollständige Messung nötig ist, sind solche Verfahren im Vergleich zu typischen FD-OCT Verfahren sehr langsam (< 100Hz), vgl. bspw. S.W. Lee et al., "Line-field optical coherence tomography using frequency-sweeping source", IEEE J. Selec. Top. Quant. Electr. 14, 50 (2008).

Ein wesentlicher gemeinsamer Nachteil ist hierbei auch die verwendete Auslegung des Probenkopfs in Freistrahloptik, wobei die Datenerzeugung durch Zeilen- oder Flächensensoren erfolgt. Dies bedeutet, dass eine räumliche Aufteilung von Probenkopf und Signalerzeugung und Signalverarbeitung mit einer Verbindung durch eine Monomode-Faser nicht mehr möglich ist. Neben der hierdurch gesteigerten Komplexität des Probenkopfes und dessen erhöhter Masse wirkt sich insbesondere die durch den Stromverbrauch bewirkte Erwärmung des Probenkopfes negativ aus. Es ist im Bereich der Koordinatenmesstechnik allgemein vorteilhaft, die über die Oberfläche bewegten Komponenten möglichst passiv zu gestalten, so dass keine thermischen Einflüsse resultieren können, welche die zur Bewegung verwendete Trägerstruktur deformieren. Zudem führt eine geringe Masse der zu bewegenden Komponenten, insbesondere aber des Probenkopfes zu einer verbesserten Dynamik und zu geringeren beschleunigungsabhängigen Deformationen der Tragstruktur.

Eine Aufgabe besteht darin, eine verbesserte Entfernungsmessanordnung bzw. ein entsprechendes Messgerät zur Vermessung von Oberflächen bzw. zur Erfassung von Oberflächentopographien sowie ein ebensolches Verfahren bereitzustellen.

Eine weitere Aufgabe besteht darin, eine solche verbesserte Entfernungsmessanordnung bzw. ein solches Verfahren bereitzustellen, welches eine Vermessung einer Mehr- oder Vielzahl von Punkten ohne Bewegung des Probenkopfes bei geringer Komplexität des Aufbaus und geringer thermischer Belastung der Tragstrukturen erlaubt.

Diese Aufgaben werden durch die Gegenstände der Ansprüche 1 bzw. 11 oder der abhängigen Ansprüche gelöst bzw. die Lösungen weitergebildet.

Die Erfindung nutzt ein interferometrisches Messprinzip mit hinsichtlich der Wellenlänge modulierter, d.h. mit veränderlicher Wellenlänge emittierender Laserquelle, wobei die Messungen in der Frequenzdomäne erfolgen. Hierbei wird die von einer Laserquelle, z.B. einer Laserdiode erzeugte Laserstrahlung moduliert, indem eine Wellenlängenrampe durchlaufen und somit die Strahlung in ihrer optischen Frequenz verändert wird. Einer zentralen Wellenlänge bzw. optischen Frequenz wird z.B. eine sinusförmige Modulation aufgeprägt. Ausgewertet wird das gemessene Interferogramm dann z.B. über eine halbe Periode der Modulationsfrequenz, in der die optische Frequenz monoton steigt oder fällt, was im Folgenden auch als Wellenlängenrampe bezeichnet wird.

Die Wellenlängenrampe kann hierbei als klassische Rampe, d.h. mit einer im wesentlichen linear ansteigenden oder abfallenden Folge von zu durchlaufenden Wellenlängen ausgebildet sein. Alternativ kann aber die Menge der unterschiedlichen Wellenlängen auch wahlfrei aufmoduliert werden, d.h. in einer von der linear gereihten Folge abweichenden Weise, solange nur die Menge der Wellenlängen während eines Hubs der Rampe einmal erfaßt und aufmoduliert wird. Der Begriff der Wellenlängenrampe umfasst somit im weiteren Sinn eine Menge von unterschiedlichen Wellenlängen, die zwar in eine auf- oder absteigende Abfolge gebracht werden können, nicht aber notwendigerweise in dieser Abfolge durchlaufen und aufmoduliert werden. Allerdings wird eine bevorzugte Ausführungsform mit einer Folge von abwechselnd auf- und abfallenden linearen Rampen ausgebildet.

Hierfür geeignete Verfahren und Komponenten werden in der WO 2009/036861 oder der europäischen Patentanmeldung mit der Anmeldenummer 11171582.7 beschrieben. Die Erfindung basiert darauf, dass wenigstens zwei optische Sendekanäle, die auch zum Empfang Verwendung finden können, realisiert werden, wobei eine zeitlich parallele Emission der Messstrahlung erfolgt. Erfindungsgemäss wird für einen gegebenen Emissionszeitpunkt jedem der Kanäle ein Teilbereich der zu durchlaufenden Wellenlängenrampe, d.h. ein Wellenlängen- und Frequenzband zugewiesen, dem die zu diesem Zeitpunkt emittierte Strahlung in Hinblick auf ihre aufzumodulierenden Wellenlängen zugeordnet ist.

Jedem Kanal kann ein fester Teilbereich der Wellenlängenrampe zugewiesen werden, der nur für die über diesen Kanal emittierte Messstrahlung durchlaufen wird, d.h. die über andere Kanäle emittierte Messstrahlung wird mit diesem Teil der Wellenlängenrampe nicht moduliert. Im Vergleich zur Wellenlängenrampe erfolgt eine Modulation mit geringerem Hub, d.h. die Wellenlängenrampe wird in Teilrampen und die Gesamtmodulation in Teilmodulationen aufgespalten. Dabei kann die Wellenlängenrampe in ihrer Gesamtheit auf alle Kanäle gleichmässig oder auch ungleichmässig, d.h. mit nicht einheitlichem Wellenlängenhub pro Kanal, aufgespalten werden. Grundsätzlich kann aber auch ein Teil der Wellenlängenrampe ungenutzt bleiben oder für andere Zwecke, z.B. für eine interne Kalibrier- oder Referenzmessung, Verwendung finden. Eine komponentenseitige Realisierung dieses Ansatzes kann beispielsweise durch eine chromatische Trennung mittels Strahlteiler, insbesondere auch durch eine abgestufte Folge von Strahlteilern erfolgen. Eine Trennbarkeit der Kanäle ergibt sich somit statisch durch deren fixe spektrale Aufteilung nach der Erzeugung der Strahlung.

Das hierdurch bewirkte chromatische Multiplexing nutzt damit die grosse Breite (100 bis 200 nm) der Wellenlängenrampe verfügbarer Quellen, welche in Teilbereiche aufgespalten wird. Hierdurch wird zwar nicht die nutzbare Kohärenzlänge beeinflusst, die durch die dynamische Linienbreite der modulierten Laserquelle gegeben ist, allerdings wird die räumliche Auflösung im Umfang der Parallelisierung reduziert. Aufgrund der hohen Genauigkeit ($3\sigma{\sim}20\text{-}30nm$) der optischen Kohärenztomographie im räumlichen Frequenzbereich, kann eine Verringerung der Meßgenauigkeit für technische Oberflächen meist problemlos hingenommen werden.

Erfindungsgemäss werden somit durch wenigstens einen chromatischen Strahlteiler Kanäle für die parallele Emission von Messstrahlung definiert, denen für einen ausgewählten Emissionszeitpunkt jeweils ein unterschiedlicher Teilbereich der Wellenlängenrampe zugewiesen wird. Jeder Kanal weist zu diesem ausgewählten Emissionszeitpunkt an seinem Ausgang, d.h. in Emissionsrichtung, eine andere konkret anliegende spektrale Verteilung auf, mithin eine andere chromatische Charakteristik. Bei der chromatischen Trennung mit statischer Zuweisung eines Wellenlängenbereichs emittiert zu einem betrachteten Emissionszeitpunkt dann stets nur der eine Kanal, dessen Wellenlängenbereich und zu diesem Zeitpunkt durchlaufener Teilbereich der Wellenlängenrampe korrespondieren.

Zudem können das chromatische Multiplexing mit einem Frequenz-Multiplexing kombiniert werden, bei dem der durch die Kohärenzlänge vorgegebene mögliche Messbereich, d.h. die realisierbare Gesamtmesstiefe, im Resultat distanzseitig aufgeteilt wird, so dass für jeden der Kanäle eine Verschiebung der Nulllage erfolgt. Jeder Kanal erhält somit einen Teilbereich des Messbereichs mit seiner jeweiligen Messtiefe zugeordnet, wobei die jeweilige Verschiebung der Nullage für einen Kanal bekannt und daher bei den Messungen bzw. deren Auswertung berücksichtigbar ist. Die Kanäle messen somit trotz unterschiedlicher Nulllagen bei einer glatten Oberfläche als Endergebnis die gleiche Distanz, wozu vor der Signalverarbeitung durch Verzögerungsstrecken unterschiedlich gestaffelte Distanzen erzeugt werden, die bei der Auswertung bekannt sind und entsprechend berücksichtigt werden. Anders ausgedrückt, die Bezugspunkte für die Messungen sind von Kanal zu Kanal verschoben, können aber rechnerisch abgeglichen werden. Die Maximalgrenze einer solchen Staffelung wird dabei durch den maximalen Messbereich und deshalb durch die Kohärenzlänge begrenzt.

Durch die unterschiedlichen Verzögerungen für die Kanäle wird der durch die Kohärenzlänge definierte Messbereich in einzelne Abschnitte aufgespalten und somit die Kohärenzlänge unterteilt. Normalerweise zeigt das Fourier-Spektrum bzw. Tomogramm bei technischen Messungen von für die Messstrahlung undurchlässigen Oberflächen, insbesondere für Metall-Oberflächen, nur ein einziges Maximum. Somit wird ein Grossteil des Raums in der Frequenz-Domäne nicht für die Messung genutzt. Durch die Aufteilung des gesamten, aufgrund der gegebenen Kohärenzlänge der Quelle zur Verfügung stehenden Meßbereichs kann eine Parallelisierung erreicht werden. Dabei kann grundsätzlich die erzielbare Genauigkeit erhalten bleiben, wobei aber durch die Aufteilung die Energie auf die verschiedenen Kanäle verteilt wird, was sich jedoch durch die Verwendung von Verstärkern kompensieren läßt.

Diese als Frequenz-Multiplexing bezeichnete Verlagerung der Nullpunkte für die verschiedenen Kanäle durch verzögernde Aufteilungsstrecken erlaubt eine baulich kompakte Ausführung, bei der die verzögernde Wirkung durch unterschiedliche Pfadlängen in Medien, wie z.B. Gläsern, verwirklicht wird.

Zusätzlich können zur Vermeidung von Übersprechen bzw. Cross-Talk Kohärenzverzögerungsstrecken verwendet werden, deren relativer Längenabstand zwischen aufeinanderfolgenden Kanälen jeweils grösser als die Kohärenzlänge ist.

Damit ist es erfindungsgemäss möglich, eine interferometrische Entfernungsmeßanordnung nach dem Prinzip der optischen Kohärenztomographie im Frequenzbereich zu realisieren, bei der bei Parallelisierung des Meßvorgangs eine Trennung von Probenkopf und Signalverarbeitung und deren Verbindung über eine einzelne Monomode-Faser möglich wird. Der über die Oberfläche zu bewegende Probenkopf kann hierdurch elektronisch passiv und ohne Erzeugung von thermischer Belastung ausgelegt werden. Durch die Verwendung des chromatischen Multiplexings, insbesondere auch in Kombination mit dem Frequenz-Multiplexing, kann die Meßrate für die parallelisierte Messung mit zeilen- oder matrixförmiger Anordnung der Kanäle auf dem Niveau der Einzelpunktmessung gehalten werden.

Erfindungsgemässe Entfernungsmessanordnungen werden nachfolgend anhand von in der Zeichnung schematisch dargestellten Ausführungsbeispielen rein beispielhaft näher beschrieben oder erläutert. Im einzelnen zeigen

Fig.1 die schematische Darstellung der interferometrischen Messanordnung in einem Messgerät des Stands der Technik zur Vermessung von Oberflächen;

Fig.2 die Darstellung des strukturellen Aufbaus eines Probenkopfs für ein ebensolches Messgerät;

Fig.3 die schematische Darstellung von Sende- und Empfangsoptik für ein ebensolches Messgerät;

Fig.4 die Darstellung des strukturellen Aufbaus eines Probenkopfs für eine erfindungsgemässe Entfernungsmessanordnung;

Fig.5 die schematische Darstellung eines ersten Teils des Strahlengangs für ein erstes Ausführungsbeispiel der erfindungsgemässen Entfernungsmessanordnung mit statischer Zuweisung spektraler Bereiche;

Fig.6 die schematische Darstellung eines zweiten Teils des Strahlengangs für das erste oder zweite Ausführungsbeispiel der erfindungsgemässen Entfernungsmessanordnung;

Fig.7 die schematische Darstellung der Aperturenanordnung einer Sende- und Empfangsoptik für eine erfindungsgemässe Entfernungsmessanordnung;

Fig.8 die schematische Darstellung des Verlaufs der detektierten Intensität gegenüber der Wellenlänge für die den Kanälen zugeordneten unterschiedlichen Teilbereiche der Wellenlängenrampe;

Fig.9a-c die schematische Darstellung eines dritten, vierten und fünften Ausführungsbeispiels der erfindungsgemässen Entfernungsmessanordnung mit statischer Zuweisung;

Fig.10 die schematische Darstellung eines zweiten Teils des Strahlengangs für ein sechstes Ausführungsbeispiel der erfindungsgemässen Entfernungsmessanordnung mit zusätzlichen Verzögerungsstrecken;

Fig.11 die schematische Darstellung eines ersten Teils des Strahlengangs für das sechste Ausführungsbeispiel der erfindungsgemässen Entfernungsmessanordnung;

Fig.12 die schematische Darstellung eines Ausführungsbeispiels für die Sende- und Empfangsoptik des sechsten Ausführungsbeispiels der erfindungsgemässen Entfernungsmessanordnung;

Fig.13 die schematische Darstellung der Verteilung der E-Felder in der Frequenz-Domäne für das sechste Ausführungsbeispiel der erfindungsgemässen Entfernungsmessanordnung und

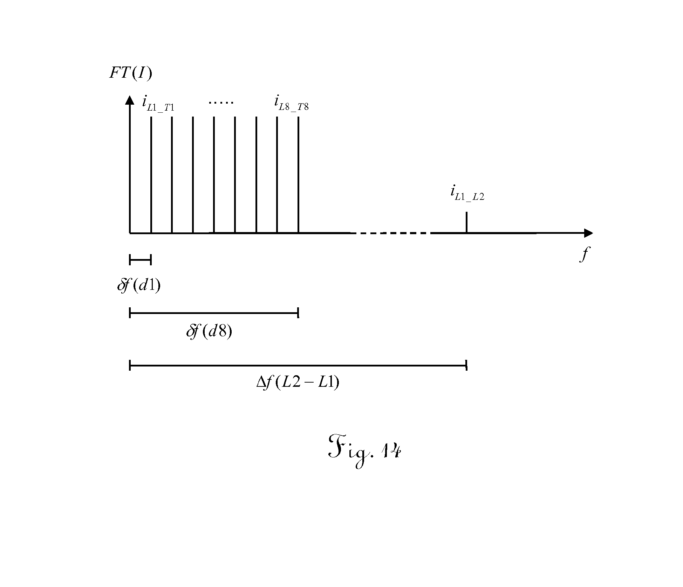

Fig.14 die schematische Darstellung der Verteilung der detektierten Intensitäten aus mehreren Interferogrammen in der Frequenz-Domäne für das sechste Ausführungsbeispiel der erfindungsgemässen Entfernungsmessanordnung.

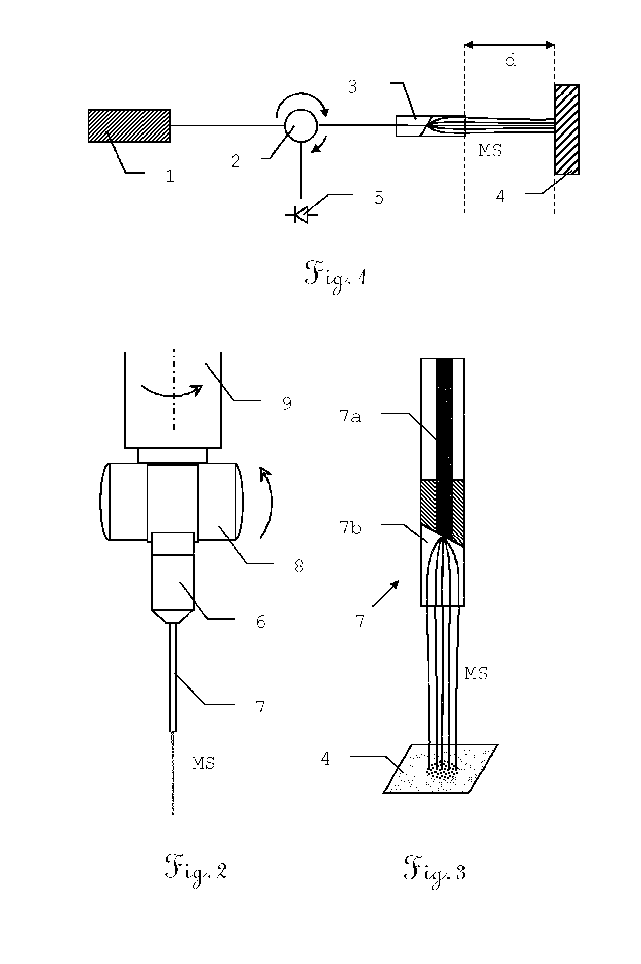

Fig.1 zeigt die schematische Darstellung der interferometrischen Messanordnung in einem Messgerät des Stands der Technik zur Vermessung von Oberflächen, wie es bspw. in der WO 2009/036861 A1 oder der europäischen Patentanmeldung mit der Anmeldenummer 11171582.7 beschrieben ist. Eine solche Anordnung verwendet eine wellenlängenmodulierte Laserquelle 1 zur Erzeugung wenigstens eines Laserstrahls und einen Strahlungsdetektor 5 zum Empfang der von einer Oberfläche 4 zurückgestreuten Messstrahlung MS. Die modulierte Laserquelle ist dabei vorzugsweise so ausgelegt, dass sie eine Kohärenzlänge von mehr als 1 mm, insbesondere im Bereich von 1 Millimeter bis 20 Zentimeter aufweist, z.B. eine zentrale Wellenlänge zwischen 1,3 und 1,7 $\mu$m und einen durchstimmbaren Wellenlängenbereich von mehr als 40 nm bei einer dynamischen Linienbreite von unter 0,02 nm bei einer Kohärenzlänge von 60 mm oder mehr besitzt. Die Kohärenzlänge erlaubt somit auch Messungen über eine Tiefen- bzw. Entfernungsbereich von einigen Zentimetern.

Die von der Laserquelle 1 erzeugte Laserstrahlung wird über einen optischen Zirkulator 2 in den zur Messung verwendeten Interferometeraufbau, der beispielhaft in Common-Path-Geometrie ausgebildet ist, also einen teilweise gemeinsamen Interferometer-Strahlengang für Mess- und Referenzarm aufweist, eingekoppelt. Der Referenzarm wird hierbei durch einen Reflex an der optischen Austrittsfläche einer Gradientenindex-Linse definiert, so dass eine konstante, insbesondere bekannte Distanz festgelegt ist, wobei weitere Rückreflektionen vermieden werden. Damit liegt die Referenzfläche in einer die Komponenten der Sende- und Empfangsoptik integrierende Sende-/Empfangsoptik 3 innerhalb der zum Emittieren des Laserstrahls verwendeten Strahlformungsoptik. Der Messarm wird hingegen durch die Reflektion an der zu vermessenden Oberfläche 4 definiert. Das rückreflektierte Licht von Mess- und Referenzarm wird schliesslich über den optischen Zirkulator 2 wieder auf den Strahlungsdetektor 5 geführt, der vorzugsweise als InGaAs-Detektor mit einer Bandbreite von mehr als 100 MHz ausgebildet ist. In einer hier nicht dargestellten Auswerteeinheit kann schliesslich die zu messende Distanz d bestimmt werden.

Zusätzlich kann auch ein hier nicht dargestelltes Kalibrierinterferometer mit einem optischen Detektor zur Berücksichtigung bzw. Kompensation von Nichtlinearitäten im Durchstimmverhalten verwendet werden, wobei dieses Kalibrierinterferometer insbesondere in Etalon- oder Mach-Zehnder-Konfiguration ausgeführt sein kann.

Eine solche Entfernungsmessanordnung kann bspw. in einen Probenkopf eines Koordinatenmessgerätes zur abtastenden Vermessung integriert sein, wie es bspw. aus der WO 2009/036861 A1 bekannt ist. In der Fig.2 wird der strukturellen Aufbau eines solchen Probenkopfs für ein ebensolches Messgerät veranschaulicht. Das Koordinatenmessgerät weist hierbei Führungsmittel zur definiert abtastenden Führung des Probenkopfes über die zu vermessende Oberfläche und der Probenkopf wenigstens einen Emissions- und Empfangsstrahlengang zur Emission der Messstrahlung MS der interferometrischen Entfernungsmessanordnung auf.

Der Probenkopf wird, durch ein Armelement 9 und ein Gelenk 8 als Führungsmittel definiert, abtastend über die zu vermessende Oberfläche geführt, wobei auch eine Rotation des Gelenks 8 gegenüber dem Armelement 9 möglich ist. Durch die Rotierbarkeit gegenüber dem Armelement 9 und das nachfolgende Gelenk 8 kann der Probenkopf gewinkelten oder stark veränderlichen Oberflächenverläufen gut folgen. Grundsätzlich können jedoch noch weitere rotatorische oder translatorische Freiheitsgrade in die Führungsmittel integriert werden, um eine weiter verbesserte Führung des Probenkopfes zu ermöglichen.

Der Probenkopf weist wenigstens einen oberflächenseitigen Emissions- und Empfangsstrahlengang des Messstrahls MS auf. In diesem Ausführungsbeispiel werden die Strahlengänge durch eine dünne Röhre als Tastglied 7 geführt, welche die Sende-/Empfangsoptik beinhaltet. Im an diese Röhre anschliessenden dickeren Basisteil 6 des Probenkopfes kann bereits der Strahlungsdetektor selbst oder aber Lichtleiter zur Weiterleitung an einen andernorts integrierten Strahlungsdetektor angeordnet sein, wobei eine Schnittstelle zur optischen und/oder elektrischen Übertragung von Signalen und eine Kupplung zwischen Basisteil 6 des Probenkopfes und Gelenk 8 eine Auswechselbarkeit gewährleistet.

Fig.3 zeigt schematisch die Integration von Sende-/Empfangsoptik in die Röhre des Probenkopfes. In dieser Ausgestaltung dient eine Faser 7a zur Führung der zu emittierenden wie auch der intern reflektierten sowie der extern reflektierten und wieder empfangenen Messstrahlung MS. Die Emission erfolgt hierbei durch eine in dem röhrenförmigen Teil angeordnete Gradientenindex-Linse 7b, welche die Messstrahlung auf die zu vermessende Oberfläche 4 emittiert und die von dort reflektierte Messstrahlung MS wieder in die Faser 7a einkoppelt. Die Lösungen des Stands der Technik sind jedoch zumeist nur auf Einzelmessungen ausgelegt, wobei durch abtastendes Führen des Probenkopfes auch Oberflächen durchgängig erfasst werden können.

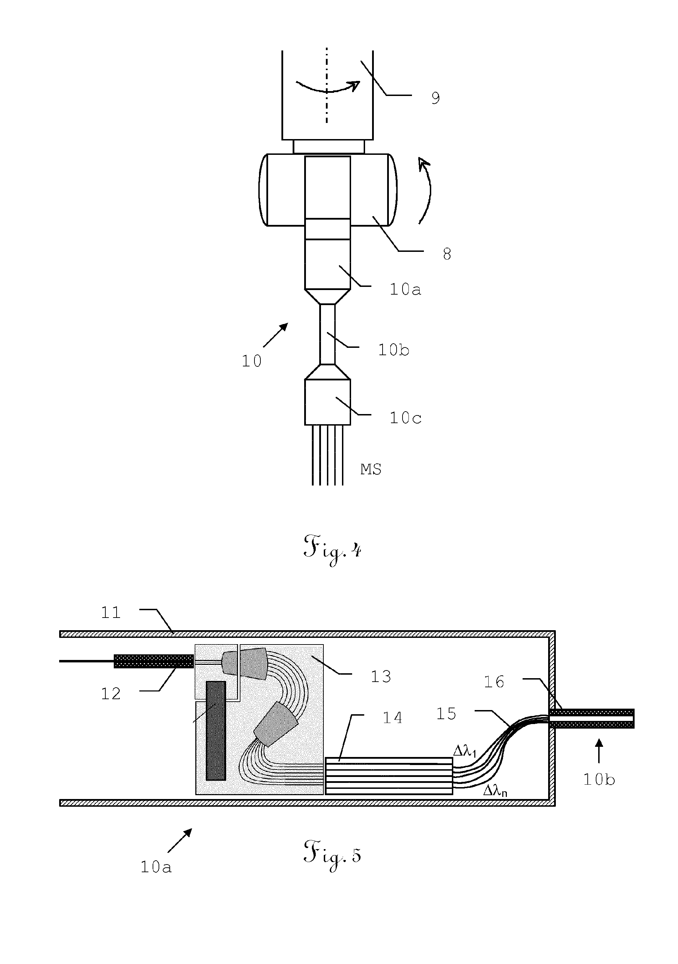

Der erfindungsgemässe Ansatz erlaubt jedoch eine verbesserte Parallelisierung und die Realisierung einer Mehr- oder Vielzahl von Messkanälen, so dass der in Fig.4 gezeigte strukturellen Aufbaus eines Probenkopfs 10 mit einer Mehrzahl von Kanälen bei einfachem strukturellem Aufbau möglich wird.

Der Probenkopf 10 mit einer erfindungsgemässen Entfernungsmessanordnung weist nunmehr einen Basisteil 10a auf, in dem Laserquelle und Auswerteelektronik angeordnet sein können. Alternativ können diese Komponenten jedoch auch Teil einer anderen Komponente des Messgerätes sein, wobei dann über eine oder mehrere Schnittstellen eine optische und/oder elektronische Verbindung zwischen Gelenk 8 und dem Basisteil 10a des Probenkopfes 10 bereitgestellt wird. Vorzugsweise ist der Basisteil 10a des Probenkopfes mit dem Optikteil 10c über eine Verbindungsröhre 10b verbunden, wobei die Verbindungsröhre 10b über einen optischen Leiter verfügt. Alternativ können jedoch auch hiervon abweichende Anordnungen zur Verwirklichung der erfindungsgemässen Entfernungsmessanordnung genutzt werden. So können bspw. auch alle Komponenten des Probenkopfes 10 in einer einzigen, kompakten Einheit konzentriert werden, so dass die Verbindungsröhre 10b entfällt.

Der Probenkopf 10 weist somit alle oder den Grossteil der Komponenten der erfindungsgemässen interferometrische Entfernungsmessanordnung zur Vermessung von Oberflächen auf, wobei diese insbesondere nach dem Prinzip der optischen Kohärenztomographie ausgestaltet ist. Hierzu wird die hinsichtlich der Wellenlänge durchstimmbare Laserquelle zum Erzeugen von Messstrahlung MS moduliert, indem die Modulation eine lineare Wellenlängenrampe durchläuft oder die Wellenlänge in anderer, nicht notwendigerweise linearer Abfolge aus einer Menge von unterschiedlichen Wellenlängen auswählt. Im Probenkopf 10 ist ein optischer Strahlengang ausgebildet, wobei eine Sendeoptik zum Emittieren der Messstrahlung MS auf die Oberfläche und eine Empfangsoptik zum Empfangen der von der Oberfläche zurückgestreuten Messstrahlung MS im Optikteil 10c ausgebildet sind. Vorzugsweise nutzen hierbei Sende- und Empfangsoptik die gleichen Komponenten, so dass beide Optiken in integrierter Bauweise als kombinierte Sende- und Empfangsoptik ausgebildet sind, welche mit dem Strahlungsdetektor über eine, insbesondere eine einzige Monomode-Faser gekoppelt ist. Im Strahlengang wird in zum Stand der Technik gleicher Weise ein Messarm und ein Referenzarm definiert bzw. ausgebildet, wobei dieses Interferometer insbesondere mit einem teilweise gemeinsamen Strahlengang von Mess- und Referenzarm als Common-Path-Interferometer ausgestaltet ist. Der Strahlungsdetektor und eine Auswerteinheit zum Bestimmen der Entfernung von einem Bezugspunkt der Entfernungsmessanordnung zur Oberfläche können entweder im Basisteil 10a des Probenkopfes 10 oder aber ausserhalb des Probenkopfes angeordnet sein, wobei in letzterem Fall der Probenkopf auf elektronische Komponenten verzichtet und somit vollständig passiv gehalten werden kann.

Im Basisteil 10a kann durch wenigstens einen Strahlteiler eine Aufteilung der Laserstrahlung erfolgen, so dass wenigstens zwei Kanäle für die parallele Emission von Messstrahlung MS definiert werden, denen erfindungsgemäss für einen gegebenen Emissionszeitpunkt jeweils ein unterschiedlicher Teilbereich der Wellenlängenrampe zugewiesen wird. Dies bedeutet, dass für einen gegebenen Zeitpunkt jedem Kanal ein unterschiedlicher Wellenlängenbereich zugewiesen wird, der für diesen Kanal zur Modulierung der Messstrahlung genutzt wird. Dabei können entweder alle Kanäle gleichzeitig emittieren oder aber im Zuge des Durchlaufens der Wellenlängenrampe nacheinander. Hierzu kann die Wellenlängenrampe in eine der Zahl der Kanäle entsprechende Anzahl von Frequenzbändern gleicher Breite aufgespalten werden, wobei jedem der Kanäle eines der Wellenlängenbänder zugewiesen wird. Alternativ kann jedoch auch ein Bereich der Wellenlängenrampe bzw. der spektralen Modulationstiefe ungenutzt bleiben oder ausserhalb der Kanäle für einen anderen Zweck genutzt werden, z.B. zur Bestimmung von Nichtlinearitäten bei der Modulation. Ebenso kann eine ungleichmässige Aufteilung der Wellenlängenrampe erfolgen, indem Teilbereiche bzw. Frequenzbänder unterschiedlicher Breite den verschiedenen Kanälen statisch oder dynamisch zugewiesen werden. Hierdurch können beispielsweise Kanäle mit unterschiedlicher Messcharakteristik realisiert werden, z.B. wenn bei einer Vermessung von Bohrlöchern Kanäle zur Vermessung der Innenfläche mit hoher Präzision parallel zu einem Kanal geringer Genauigkeit zur Positionierung in der Längsachse des Bohrlochs realisiert werden. Ebenso können den Kanälen zeitlich veränderliche Breiten der Frequenzbänder zugewiesen werden, so dass zeitlich veränderliche Messbereiche oder Messgenauigkeiten realisiert werden können.

Fig.5 zeigt den ersten, im Basisteil des Probenkopfs ausgebildeten Teil des Strahlengangs für ein erstes Ausführungsbeispiel der erfindungsgemässen Entfernungsmessanordnung. In diesem ersten Ausführungsbeispiel wird die Wellenlängenrampe in einer der Zahl der Kanäle entsprechenden Anzahl von Wellenlängenbänder gleicher Breite aufgespalten, wobei die Teilbereiche der Wellenlängenrampe durch chromatische Trennung erzeugt werden. Hierzu wird die von der Laserquelle erzeugte Laserstrahlung über eine optische Faser und eine Ferrule 12 für diese einzelne Faser in ein im Gehäuse 11 des Basisteils gelegenes Arrayed-Waveguide-Grating als Strahlteiler 13 eingekoppelt. Durch ein solches Arrayed-Waveguide-Grating kann chromatisches Multiplexing erzeugt werden, indem der Durchstimmbereich bzw. die Wellenlängenrampe in verschiedene Zweige oder Teilbereiche unterteilt wird. Für einen Durchstimmbereich zwischen 1500 und 1600 nm können Komponenten aus dem Bereich der Telekommunikation für das c- und 1-Band zum Einsatz kommen.

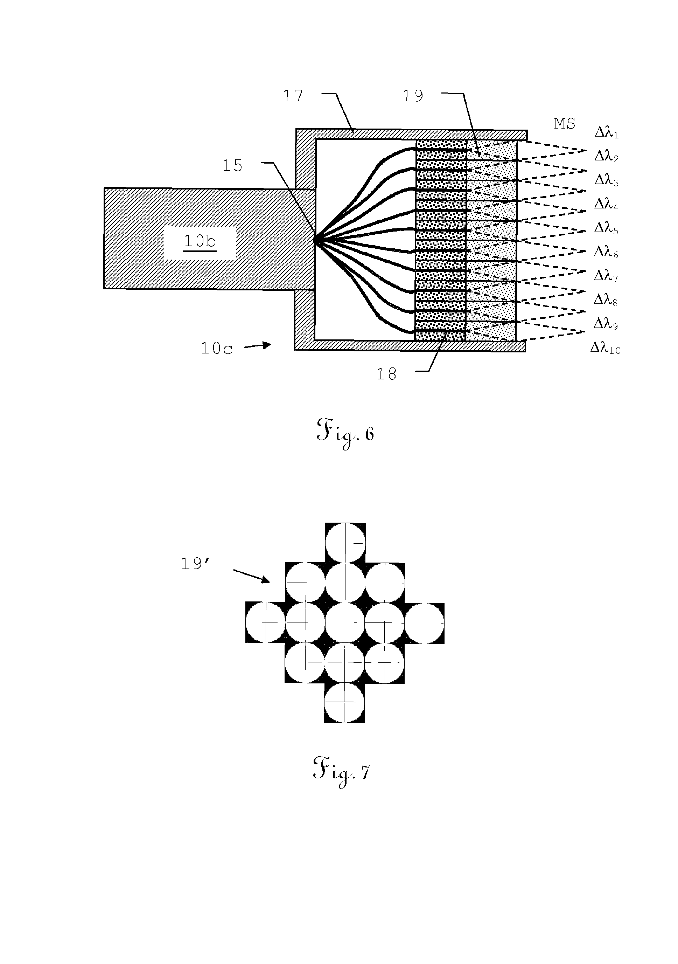

So werden Arrayed-Waveguide-Gratings in diesem Gebiet verwendet, um einen Kanal in verschiedene getrennte sog. ITU-Kanäle aufzuteilen. Dabei hängt die Breite der Kanäle vom verwendeten ITU-Standard ab, wobei diese von 50, 100 oder 200 GHz bis zu wenigen Nanometern reicht. Durch einen solchen Strahlteiler kann eine chromatische bzw. spektrale Aufspaltung der Laserstrahlung in verschiedene, insbesondere eine Vielzahl von Kanälen realisiert werden, wobei ein Arrayed-Waveguide-Grating als Strahlteiler 13 wie ein kompaktes Spektrometer wirkt. Am Ausgang des Strahlteilers 13 wird die in Kanäle aufgeteilte Messstrahlung über eine Mehrfaser-Ferrule 14 in einzelne optische Fasern 15 eingekoppelt, denen jeweils einer der Frequenz- bzw. Wellenlängenbereiche $\Delta\lambda_1$-$\Delta\lambda_n$ zugeordnet ist. Die Fasern 15 werden als Faserbündel 16 über die Verbindungsröhre 10b in den in Fig.6 dargestellten Optikteil 10c des Probenkopfes geführt.

In dieser Fig.6 wird der zweite Teils des Strahlengangs für das Ausführungsbeispiel der erfindungsgemässen Entfernungsmessanordnung veranschaulicht. Die über die Verbindungsröhre 10b geführten optischen Fasern 15 werden im Innern des Gehäuses 17 des Optikteils 10c über Einzelfaser-Ferrulen 18 in eine Zeile aus Gradientenindex-Linsen 19 eingekoppelt, über welche die Messstrahlung mit den für jeden der - hier in Übereinstimmung mit dem ersten Ausführungsbeispiel - zehn Kanäle dieses Ausführungsbeispiels unterschiedlichen Wellenlängenbereichen $\Delta\lambda_1$-$\Delta\lambda_{10}$ emittiert wird. Die Lage des lokalen Oszillators des Referenzarms kann beispielsweise bei dem Übergang von Ferrule 18 zu Gradientenindexlinse 19 oder auch beim Übergang Gradientenindexlinse zu Luft durch eine geeignete, reflektierende dielektrische Beschichtung definiert sein. Die Strahlengänge von Referenz- und Messarm zeigen damit einen maximalen Überlapp für eine Common-Path-Geometrie. Über die für den Sendevorgang verwendeten Komponenten erfolgt ebenfalls der Empfang der von der Oberfläche zurückgeworfenen Meßstrahlung, so dass ein solcher Probenkopf eine integrierte Sende-/Empfangsoptik mit einer Zeile von zehn Mikrolinsen verwirklicht, denen jeweils einer der chromatisch getrennten Meßkanäle zugeordnet ist. Da durch das chromatische Multiplexing die nutzbare Kohärenzlänge nicht beeinträchtigt wird, besteht hinsichtlich der Ausgestaltung der Strahlführung grosse Flexibilität, wobei jeder Kanal unabhängig ausgelegt werden kann, z.B. in Hinblick auf Kollimierung oder Strahlquerschnitt.

Alternativ zur in Fig.6 dargestellten zeilenartigen Anordnungsweise kann jedoch auch eine matrixartige Aperturenanordnung 19' einer Sende- und Empfangsoptik für eine erfindungsgemässe Entfernungsmessanordnung verwendet werden, wie sie in Fig.7 schematisch dargestellt wird. Mit solchen zweidimensionalen Mikrolinsen- bzw. Aperturanordnungen können insbesondere flächig ausgedehnte Strukturen schnell und parallelisiert vermessen werden.

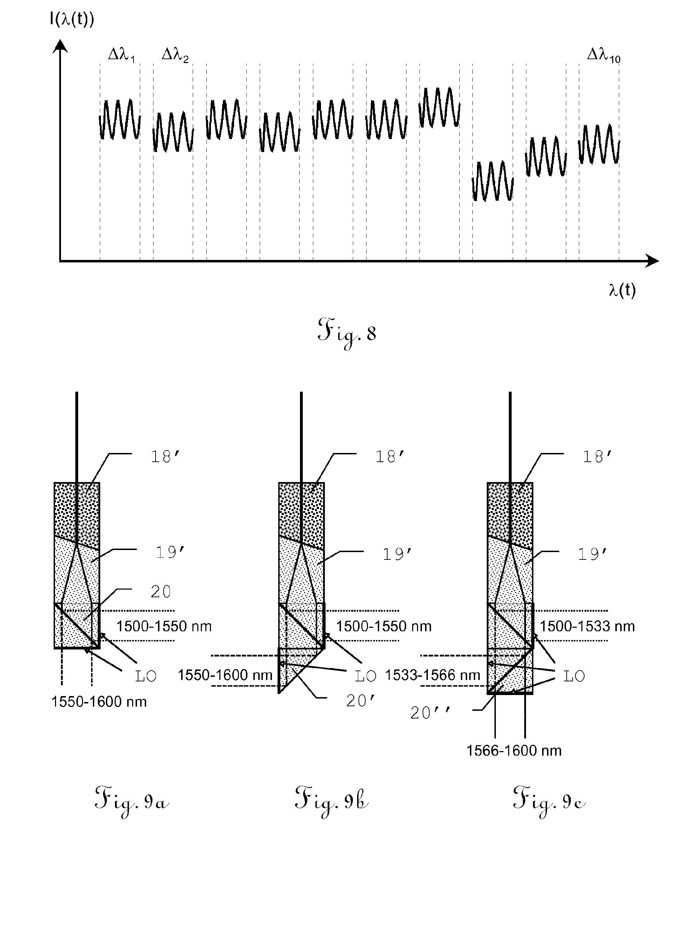

Fig.8 zeigt die schematische Darstellung des zeitabhängigen Verlaufs der detektierten Intensität I($\lambda$(t)) gegenüber der Wellenlänge $\lambda$(t) für die den Kanälen zugeordneten unterschiedlichen Teilbereiche $\Delta\lambda_1$-$\Delta\lambda_{10}$ der Wellenlängenrampe bei einem Multiplexing im Frequenzbereich. Das Intensitätsprofil ist hierdurch in verschiedene kleinere Interferogramme aufgeteilt. Bei der Signalverarbeitung wird das aufgenommene Intensitätsprofil in die Kanäle aufgeteilt, wobei jeder Kanal nachfolgend separat verarbeitet wird. Das Ziel besteht in der Bestimmung der Frequenz des Kanal-Interferogramms, durch Fourier-Transformation und eine geometrische Schwerpunktbestimmung in der Frequenz-Domäne. Die ermittelte Frequenz ist proportional zur Zieldistanz, d.h. der Distanz zur zu vermessenden Oberfläche.

In Fig.9a-c werden ein drittes, viertes und fünftes Ausführungsbeispiel der erfindungsgemässen Entfernungsmessanordnung schematisch dargestellt. Neben dem in Fig.6 dargestellten Probenkopf mit einer Mehrzahl von Kanälen kann auch eine geringere Zahl von Kanälen erfindungsgemäss realisiert werden, bspw. wenn dies für die jeweilige Messanwendung genügt. In solchen Fällen kann die chromatische Strahlteilung auch innerhalb der der Emission unmittelbar vorgelagerten Komponenten der Sendeoptik erfolgen. Durch chromatische Strahlteiler mit auf die jeweilige Trennung hin abgestimmten Schichten kann im Strahlengang jeweils ein Kanal absepariert und damit in eine andere Richtung geführt werden.

So zeigen die Fig.9a-c drei unterschiedliche Ausführungsbeispiele, bei denen stets die optische Faser über eine Ferrule 18' mit einer Gradientenindex-Linse 19' verbunden ist und die Laserstrahlung in einem Wellenlängenbereich von 1500-1600 nm moduliert wird. Nachfolgend wird in den Fig.9a-b aus dem Strahlengang durch einen Strahlteiler 20 ein erster Kanal mit dem Wellenlängenband 1500-1550nm als Teilbereich der Wellenlängenrampe ausgekoppelt, wobei der verbleibende Teilbereich mit dem Wellenlängenband 1550-1600 nm als zweiter Kanal emittiert wird.

Hierzu erfolgt in Fig.9b eine Umlenkung der Emissionsrichtung durch eine Spiegel- oder Grenzfläche 20', so dass mit einer solchen Anordnung bspw. Bohrlöcher oder Zylinderöffnungen in Motoren abgetastet werden können, wobei aufgrund der Emission in zwei entgegengesetzte Richtungen nur eine halbe Umdrehung des Probenkopfes für die Abtastung des Vollkreises genügt.

Fig.9c zeigt eine ähnliche Ausgestaltung, bei der jedoch über zwei strahlteilende Spiegelflächen 20" insgesamt drei Kanäle mit den Wellenlängenbändern 1500-1533nm, 1533-1566nm und 1566-1600nm definiert werden.

In allen drei Ausführungsbeispielen der Fig.9a-c kann bei einer Kollimierung der Messstrahlung für jeden der Kanäle eines der Enden des als Referenzarm genutzten lokalen Oszillators durch die Austrittsfläche LO der Messstrahlung definiert werden, so dass für Mess- und Referenzarm weitgehend identische Strahlgänge in Common-Path-Geometrie resultieren. Erfindungsgemäss können jedoch auch andere Strahlführungen, insb. Strahlumlenkungen, sowie andersartige Strahlformungen genutzt werden, z.B. durch Fokussierung der Messstrahlung auf die Oberfläche.

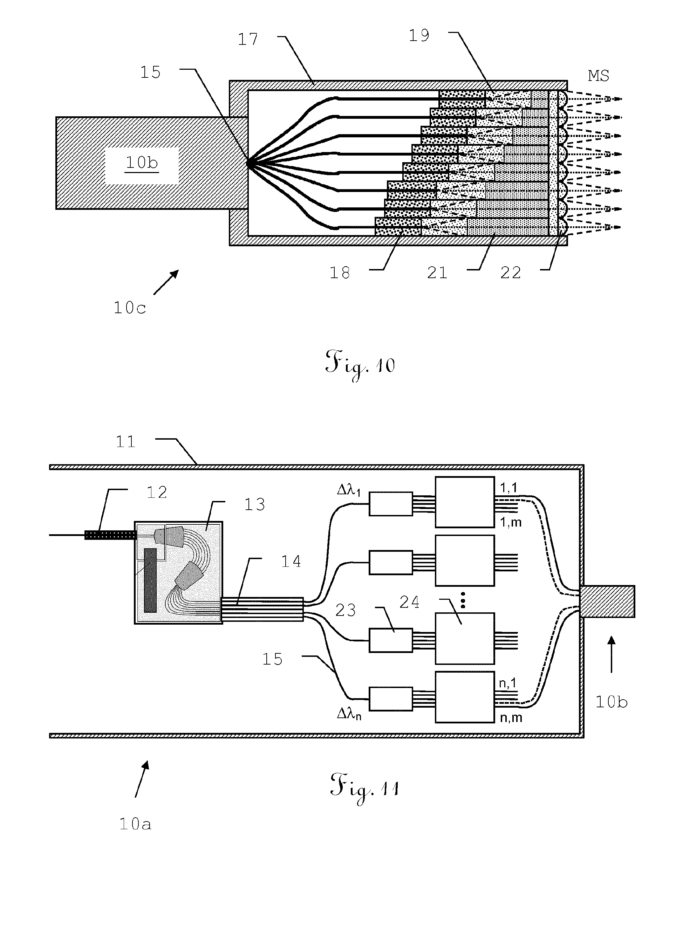

Das Prinzip der chromatischen Aufteilung kann zudem mit dem in der europäischen Patentanmeldung mit der Eingangsnummer 1739811 und dem Aktenzeichen EP12177582.9 beschriebenen Ansatz des Frequenz-Multiplexings kombiniert werden. Fig.10 und Fig.11 zeigen hierzu die schematische Darstellung eines sechsten Ausführungsbeispiels der erfindungsgemässen Entfernungsmessanordnung, bei dem der durch die Kohärenzlänge vorgegebene mögliche Messbereich im Resultat distanzseitig aufgeteilt wird, so dass für jeden der Kanäle eine Verschiebung der Null-Lage und damit des räumlichen Bezugspunktes erfolgt. Bei einer glatten Oberfläche würden alle Kanäle als Endergebnis die gleiche Distanz messen, wozu vor der Signalverarbeitung durch Verzögerungsstrecken unterschiedlich gestaffelte Distanzen erzeugt werden, die bei der Auswertung bekannt sind und entsprechend berücksichtigt werden. Damit sind die Bezugspunkte für die Messungen von Kanal zu Kanal verschoben, können aber rechnerisch abgeglichen werden. Die Maximalgrenze einer solchen Staffelung wird dabei durch den maximalen Messbereich und deshalb durch die quellenseitig vorgegebene Kohärenzlänge bestimmt.

Fig.10 zeigt die schematische Darstellung eines zweiten Teils des Strahlengangs für ein sechstes Ausführungsbeispiel der erfindungsgemässen Entfernungsmessanordnung mit solchen zusätzlichen Verzögerungsstrecken. Das Optikteil 10c ist über die Verbindungsröhre 10b des Probenkopfes mit dem Basisteil 10a verbunden, in dem auch die optischen Fasern 15 der Kanäle verlaufen.

Im Gehäuse 17 des Optikteils 10c werden die Fasern 15 über jeweils zugeordnete Ferrulen 18 in Gradientenindex-Linsen 19 eingekoppelt, die als Kollimatoren fungieren. Hierbei stellt der jeweilige Übergang von Ferrule 18 zu Gradientenindex-Linse 19 die rückreflektierende Oberfläche zur Festlegung des Referenzarms in Common-Path-Geometrie dar. Zumindest für n-1 der n Kanäle ist der Gradientenindex-Linse 19 eines jeden Kanals eine individuelle Verzögerungsstrecke für die Messstrahlung MS nachgelagert, die insbesondere durch Glaselemente 21 unterschiedlicher Länge realisiert werden kann, die in ihren Längen so gewählt sind, dass jedem der Kanäle ein unterschiedlicher Bruchteil der Kohärenzlänge bzw. des maximalen Messbereichs zugeordnet ist.

Die Enden der Verzögerungsstrecken 21 sind je nach Aperturengeometrie mit einer Zeile oder einer Matrix von Mikrolinsen 22 verbunden. Aufgrund der Verzögerungsstrecke weist nun jeder Kanal eine individuelle, durch das jeweilige Glaselement 21 als Verzögerungsstrecke bestimmte Länge $\delta L_i$ zwischen Fokuspunkt als Zieloberfläche und Übergang von Ferrule 18 zu Gradientenindex-Linse 19 auf.

Diese Längen $\delta L_i$ und die dadurch bewirkten Verzögerungen erlauben es, bei der Signalverarbeitung die Kanäle in der Fourier-Domäne zu trennen. Auch bei diesem Ausführungsbeispiel wird eine integrierte Sende- und Empfangsoptik verwendet, so dass die von der zu vermessenden Oberfläche zurückgeworfene Messstrahlung MS wieder über die Mikrolinsen 22 und Glaselement 21 sowie die weiteren Komponenten geführt wird. Nach deren Passieren werden die detektierten Signale wieder durch eine Strahlteiler zusammengeführt und in eine einzige Monomode-Faser eingekoppelt und vermittels dieser zum Strahlungsdetektor geführt, welcher insbesondere auch ausserhalb des dann elektronisch passiven Probenkopfes angeordnet sein kann. Hierbei können durch den Strahlteiler verursachte Verluste durch nachgeschaltete Verstärker wieder kompensiert werden.

Zusätzlich zu den Verzögerungsstrecken im Optikteil 10c können Kohärenzverzögerungseinheiten zur Vermeidung von Übersprechen zwischen den Kanälen verwendet werden. Die Integration von Kohärenzverzögerungseinheiten in den Basisteil 10a wird in Fig.11 für den ersten Teil des Strahlengangs für das sechste Ausführungsbeispiel der erfindungsgemässen Entfernungsmessanordnung gezeigt, in dem die beiden Ansätze der statischen chromatischen Trennung und des Frequenz-Multiplexings miteinander kombiniert werden.

Im Gehäuse 11 des Basisteils 10a ist der Monomode-Faser mit Ferrule 12 ein Arrayed-Waveguide-Grating als chromatischer Strahlteiler 13 nachgeordnet, wie er auch in Fig.5 bzw. dem ersten Ausführungsbeispiel gezeigt wird. Nach dem Ausgang des Strahlteilers 13 wird die in Kanäle aufgeteilte Messstrahlung über eine Mehrfaser-Ferrule 14 wiederum in n einzelne optische Fasern 15 eingekoppelt, denen jeweils einer der Frequenz- bzw. Wellenlängenbereiche $\Delta\lambda_1$-$\Delta\lambda_n$ zugeordnet ist. Die Fasern 15 werden ihrerseits jeweils zu einem nicht-chromatischen 1xm-Strahlteiler 23 geführt. Jedem der Strahlteiler 23 sind wiederum Kohärenzverzögerungseinheiten 24 nachgeordnet, deren von 1,1 bis n,m indizierte Ausgänge zu einem Faserbündel zusammengeführt und über die Verbindungsröhre 10b in zu den anderen Ausführungsbeispielen gleicher Weise zum Optikteil geführt werden. Die in diesem Beispiel gezeigte Abfolge von chromatischer Strahlteilung 13 mit nachfolgenden Kohärenzverzögerungseinheiten 23 und 24 ist hierbei nicht zwingend und kann insbesondere in ihrer Reihenfolge auch umgekehrt werden. Die Kanäle weisen in den Kohärenzverzögerungseinheiten Kohärenzverzögerungsstrecken zur Vermeidung von Übersprechen zwischen den Kanälen auf, die insbesondere als optische Fasern ausgebildet sein können. Der relative Längenabstand $\Delta L_i$ von Kanal $L_i$ zu Kanal $L_{i+1}$ ist dabei jeweils grösser als die Kohärenzlänge $L_{Coh}$ der Laserquelle

$$\Delta L_i = L_{i+1} - L_i > \frac{L_{coh}}{2}$$

Diese Kohärenzverzögerungsstrecken dienen dabei lediglich zum Vermeiden des Übersprechens, so dass u.U. darauf verzichtet werden kann, beispielsweise bei hinreichend großem Abstand der Kanäle.

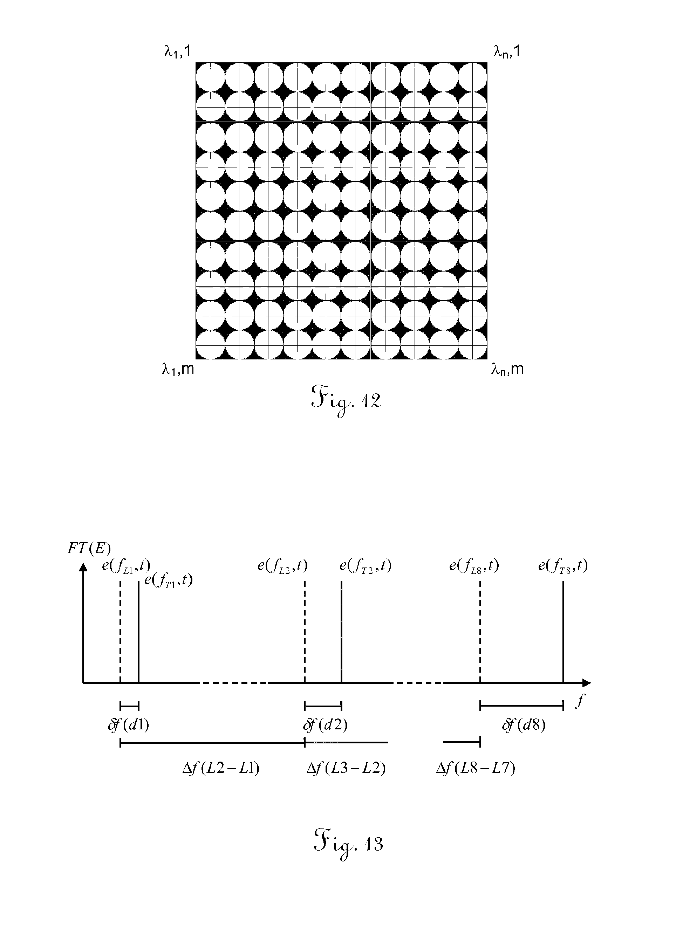

Die Aperturen der verschiedenen Kanäle können insbesondere in der in Fig.12 gezeigten Abfolge matrixartig angeordnet werden.

Fig.13 veranschaulicht die Verteilung der E-Felder bzw. deren Fourier-Transformierten FT(E)in der Frequenz-Domäne für das Grundprinzip des Frequenz-Multiplexings, welches im sechsten Ausführungsbeispiel der erfindungsgemässen Entfernungsmessanordnung zur Anwendung kommt. Das FrequenzSpektrum besteht zu einem Zeitpunkt t aus Beiträgen verschiedener elektromagnetischer Felder, wobei jeder Kanal i ein Signal des lokalen Oszillators $e(f_{Li},t)$ sowie ein Signal des Ziels bzw. der Zieloberfläche $e(f_{Ti},t)$ aufweist. Die Kanäle sind dabei in der Frequenz-Domäne jeweils wie folgt beabstandet

$$\Delta f_{ch\_i} = \frac{2\Delta L_i \cdot \gamma}{c}$$

wobei c die Lichtgeschwindigkeit und $\gamma$ die Durchstimmgeschwindigkeit der Modulation der Laserquelle, z.B. 20 THz/ms, bezeichnen.

Neben den großen Abständen $\Delta f_{ch\_i}$ der Kanäle zueinander teilt sich jeder Kanal in die beiden Signalanteile des lokalen Oszillators LO, d.h. des Referenzarms, und des Ziels, d.h. des Messarms, mit dem Abstand

$$\delta f_{ch\_i} = \frac{2\delta L_i \cdot \gamma}{c}, mit \ \delta L_i = L_{t\arg et\_i} - L_{LO\_i}$$

wobei $L_{LO-i}$ und $L_{target-i}$ die jeweiligen Längen von Referenzarm und Messarm bezeichnen, so dass deren Differenz $\delta L_i$ der gesuchten Distanz zur Oberfläche entspricht. Die Bestimmung dieser gesuchten Distanzen zu der zu vermessenden Oberfläche ist grundsätzlich aus dem Stand der Technik bekannt, wie er beispielsweise in der WO 2009/036861 oder der europäischen Patentanmeldung mit der Anmeldenummer 11171582.7 beschrieben wird.

Fig.15 zeigt die korrespondierende schematische Darstellung der aus mehreren Interferogrammen bestehende Verteilung der detektierten Intensitäten bzw. deren Fourier-Transformierten FT(I) in der Frequenz-Domäne für das sechste Ausführungsbeispiel der erfindungsgemässen Entfernungsmessanordnung.

**Patentansprüche**

1. Interferometrische Entfernungsmessanordnung zur Vermessung von Oberflächen (4), insbesondere nach dem Prinzip der optischen Kohärenztomographie, mit wenigstens

   - einer durchstimmbaren Laserquelle (1) mit einer Kohärenzlänge zum Erzeugen von mit einer Wellenlängenrampe modulierten Messstrahlung (MS), wobei die Kohärenzlänge der Laserquelle (1) den Messbereich definiert,
   - einem optischen Strahlengang mit

     o einer Sendeoptik zum Emittieren der Messstrahlung (MS) auf die Oberfläche (4),
     o einer Empfangsoptik zum Empfangen der von der Oberfläche zurückgestreuten Messstrahlung (MS),
     o einem Interferometer bestehend aus einem Mess- und einem Referenzarm, insbesondere mit einem teilweise gemeinsamen Strahlengang von Mess- und Referenzarm,

   - einem Strahlungsdetektor und einer Auswerteinheit zum Bestimmen der Entfernung von einem Bezugspunkt der Entfernungsmessanordnung zur Oberfläche (4),
   **dadurch gekennzeichnet, dass**
   durch wenigstens einen Strahlteiler (13,20,20") $n \geq 2$ Kanäle für die parallele Emission von Messstrahlung (MS) definiert werden, denen für einen gegebenen Emissionszeitpunkt jeweils ein unterschiedlicher Teilbereich der Wellenlängenrampe zugewiesen wird.

2. Entfernungsmessanordnung nach Anspruch 1,
   **dadurch gekennzeichnet, dass**
   die Wellenlängenrampe in n Wellenlängenbänder gleicher Breite aufgespalten wird, wobei jedem der Kanäle eines der Wellenlängenbänder zugewiesen wird.

3. Entfernungsmessanordnung nach Anspruch 1 oder 2,
   **dadurch gekennzeichnet, dass**
   die Teilbereiche der Wellenlängenrampe durch chromatische Trennung erzeugt werden.

4. Entfernungsmessanordnung nach Anspruch 3,
   **dadurch gekennzeichnet, dass**
   der Strahlteiler (13) ein Arrayed-Waveguide-Grating ist.

5. Entfernungsmessanordnung nach Anspruch 3,
   **dadurch gekennzeichnet, dass**
   die chromatische Trennung durch einen chromatischen Strahlteiler zur Auskopplung eines Teilbereichs der Wellenlängenrampe erfolgt, welcher innerhalb der der Emission unmittelbar vorgelagerten Komponenten der Sendeoptik angeordnet ist.

6. Entfernungsmessanordnung nach einem der vorangehenden Ansprüche,
   **dadurch gekennzeichnet, dass**
   Sendeoptik und Empfangsoptik als kombinierte Sende- und Empfangsoptik (10b) ausgebildet sind, welche mit dem Strahlungsdetektor über eine, insbesondere eine einzige Monomode-Faser gekoppelt ist.

7. Entfernungsmessanordnung nach einem der vorangehenden Ansprüche,
   **dadurch gekennzeichnet, dass**
   die Kanäle in der Sendeoptik zeilen- oder matrixartig angeordnet sind.

8. Entfernungsmessanordnung nach einem der vorangehenden Ansprüche,
   **dadurch gekennzeichnet, dass**
   den Kanälen jeweils ein unterschiedlicher Teilbereich des durch die Kohärenzlänge definierten Messbereichs zugewiesen wird.

9. Entfernungsmessanordnung nach Anspruch 8,
   **dadurch gekennzeichnet, dass**
   den Kanälen durch Verzögerungsstrecken unterschiedlicher Länge jeweils ein unterschiedlicher Teilbereich des durch die Kohärenzlänge definierten Messbereichs zugewiesen wird.

**10.** Entfernungsmessanordnung nach Anspruch 9,
**dadurch gekennzeichnet, dass**
wenigstens einer der Kanäle eine individuelle, durch ein jeweiliges Glaselement als Verzögerungsstrecke bestimmte Länge $\delta L_i$ zwischen einem Fokuspunkt und einem Übergang zu einer Ferrule aufweist.

**11.** Interferometrisches Entfernungsmessverfahren zur Vermessung von Oberflächen (4), insbesondere nach dem Prinzip der optischen Kohärenztomographie, mit wenigstens einem

- Erzeugen von mit einer Wellenlängenrampe modulierten Messstrahlung (MS) durch eine Laserquelle (1) mit einer Kohärenzlänge, wobei die Kohärenzlänge der Laserquelle (1) den Messbereich definiert,
- Emittieren der Messstrahlung (MS) auf die Oberfläche (4),
- Empfangen der von der Oberfläche zurückgestreuten Messstrahlung (MS) mit einem interferometrischen Bestimmen der Entfernung von einem Bezugspunkt der Entfernungsmessanordnung zur Oberfläche (4),
**dadurch gekennzeichnet, dass**
die Messstrahlung (MS) parallel über $n \geq 2$ Kanäle emittiert wird, wobei den Kanälen für einen gegebenen Emissionszeitpunkt jeweils unterschiedliche Teilbereiche der Wellenlängenrampe zugewiesen werden.

**12.** Entfernungsmessverfahren nach Anspruch 11,
**dadurch gekennzeichnet, dass**
die Wellenlängenrampe in n Wellenlängenbänder gleicher Breite aufgespalten wird, wobei jedem der Kanäle eines der Wellenlängenbänder zugewiesen wird.

**13.** Entfernungsmessverfahren nach Anspruch 11 oder 12,
**dadurch gekennzeichnet, dass**
die Teilbereiche der Wellenlängenrampe durch chromatische Trennung erzeugt werden.

**14.** Entfernungsmessverfahren nach einem der vorangehenden Ansprüche 11 bis 13,
**dadurch gekennzeichnet, dass**
den Kanälen jeweils ein unterschiedlicher Teilbereich des durch die Kohärenzlänge definierten Messbereichs zugewiesen wird.

**15.** Entfernungsmessverfahren nach Anspruch 14,
**dadurch gekennzeichnet, dass**
den Kanälen durch Verzögerungen unterschiedlicher Zeitdauer jeweils ein unterschiedlicher Teilbereich des durch die Kohärenzlänge definierten Messbereichs zugewiesen wird.

Fig. 1

Fig. 2

Fig. 3

Fig. 4

Fig. 5

**Fig. 6**

**Fig. 7**

I($\lambda$(t))

$\Delta\lambda_1$  $\Delta\lambda_2$  $\Delta\lambda_{10}$

$\lambda$(t)

$\mathfrak{Fig.}$ 8

18'

19'

20

1500-1550 nm

LO

1550-1600 nm

$\mathfrak{Fig.}$ 9a

18'

19'

1500-1550 nm

1550-1600 nm

LO

20'

$\mathfrak{Fig.}$ 9b

18'

19'

1500-1533 nm

1533-1566 nm

LO

20''

1566-1600 nm

$\mathfrak{Fig.}$ 9c

Fig. 10

Fig. 11

$\lambda_1,1$        $\lambda_n,1$

$\lambda_1,m$        $\lambda_n,m$

$\mathcal{F}ig.$ 12

$FT(E)$

$e(f_{L1},t)$   $e(f_{T1},t)$     $e(f_{L2},t)$    $e(f_{T2},t)$     $e(f_{L8},t)$    $e(f_{T8},t)$

$f$

$\delta f(d1)$       $\delta f(d2)$       $\delta f(d8)$

$\Delta f(L2-L1)$    $\Delta f(L3-L2)$    $\Delta f(L8-L7)$

$\mathcal{F}ig.$ 13

$FT(I)$

$i_{L1\_T1}$ ..... $i_{L8\_T8}$

$i_{L1\_L2}$

$f$

$\delta\!f(d1)$

$\delta\!f(d8)$

$\Delta\!f(L2-L1)$

Fig. 14

Europäisches
Patentamt

European
Patent Office

Office européen
des brevets

## EUROPÄISCHER RECHERCHENBERICHT

Nummer der Anmeldung

EP 12 17 7615

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2009/036861 A1 (LEICA GEOSYSTEMS AG [CH]; SIERCKS KNUT [CH]; JENSEN THOMAS [CH]; SCHNE) 26. März 2009 (2009-03-26) * Seite 17, Zeile 26 - Seite 19, Zeile 10, Abbildungen 5a-5h * ----- | 1-15 | INV. G01B9/02 |
| X | US 2007/002327 A1 (ZHOU YAN [US] ET AL) 4. Januar 2007 (2007-01-04) * Absatz [0053]; Abbildungen 8-10 * ----- | 1-15 | |
| X | YOUXIN MAO ET AL: "Simultaneous multi-wavelength-band optical frequency domain imaging for spectroscopic investigations", SPIE, PO BOX 10 BELLINGHAM WA 98227-0010, USA, Bd. 8155, 22. August 2011 (2011-08-22), - 25. August 2011 (2011-08-25), Seiten 81551A-1-81551A-7, XP040563664, ISBN: 9780819487650 * Seiten 81551A-2 - Seiten 81551A-3; Abbildung 2 * ----- | 1-15 | |
| X | WANG ET AL: "Wavelength encoded OCT imaging using swept-source", SPIE, PO BOX 10 BELLINGHAM WA 98227-0010 USA, Bd. 6826, 12. November 2007 (2007-11-12), - 15. November 2007 (2007-11-15), XP040431908, * das ganze Dokument * ----- | 1-15 | |

RECHERCHIERTE SACHGEBIETE (IPC)

G01B

Der vorliegende Recherchenbericht wurde für alle Patentansprüche erstellt

| Recherchenort | Abschlußdatum der Recherche | Prüfer |
|---|---|---|
| München | 7. November 2012 | Malcoci, Andrei |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 12 17 7615

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-11-2012

| Im Recherchenbericht angeführtes Patentdokument | Datum der Veröffentlichung | Mitglied(er) der Patentfamilie | Datum der Veröffentlichung |
|---|---|---|---|
| WO 2009036861 A1 | 26-03-2009 | AU 2008300962 A1<br>CA 2698961 A1<br>CN 101802542 A<br>EP 2037214 A1<br>EP 2185890 A1<br>JP 2010539458 A<br>US 2010312524 A1<br>WO 2009036861 A1 | 26-03-2009<br>26-03-2009<br>11-08-2010<br>18-03-2009<br>19-05-2010<br>16-12-2010<br>09-12-2010<br>26-03-2009 |
| US 2007002327 A1 | 04-01-2007 | AT 524706 T<br>EP 1899675 A1<br>US 2007002327 A1<br>WO 2007003288 A1 | 15-09-2011<br>19-03-2008<br>04-01-2007<br>11-01-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4325337
- DE 4325347
- US 5402582 A
- EP 1474650 A

- WO 2009036861 A
- EP 11171582 A
- WO 2009036861 A1
- EP 12177582 A

**In der Beschreibung aufgeführte Nicht-Patentliteratur**

- **J. SUN et al.** MEMS-based endoscopic OCT. *Int. J. of Opt.,* 2011
- **T. KLEIN et al.** Megahertz OCT for ultrawide-field retinal imaging with a 1050nm Fourier domain mode-locked laser. *Opt. Express,* 2011, vol. 19, 3044-3062
- **Y.K. TAO et al.** High-speed complex conjugate resolved retinal spectral domain optical coherence tomography using sinusoidal phase modulation. *Opt. Lett.,* 2007, vol. 32, 2918

- **T. DRESEL et al.** Three-dimensional sensing of rough surfaces by coherence radar. *Appl. Opt.,* 1992, vol. 31, 919
- **S.W. LEE et al.** Line-field optical coherence tomography using frequency-sweeping source. *IEEE J. Selec. Top. Quant. Electr.,* 2008, vol. 14, 50